# EUROPÄISCHE PATENTSCHRIFT

(11) **EP 0 793 025 B1**
(45) Veröffentlichungstag und Bekanntmachung des Hinweises auf die Patenterteilung: **03.05.2000**
(21) Anmeldenummer: 97102549.9
(22) Anmeldetag: 18.02.1997
(51) Int. Cl.: F16B 13/06, F16B 13/12

(54) **Metalldübel zur Verankerung in dünnen Wandplatten**
Metallic dowel for anchoring in thin wall panels
Cheville en métal d'ancrage pour panneaux muraux minces

(30) Priorität: 01.03.1996 DE 29603773 U
(43) Veröffentlichungstag der Anmeldung: 03.09.1997
(73) Patentinhaber: A. Raymond & Cie, F-38028 Grenoble-Cédex (FR)
(72) Erfinder: Forest, Guy, 38340 Voreppe (FR); Collas, Jean, 38000 Grenoble (FR); Barnavol, Charles, 38100 Grenoble (FR); Légat, Jean-Jacques, 38690 Colombe (FR)
(74) Vertreter: Kirchgaesser, Johannes, Dipl.-Ing.

(56) Entgegenhaltungen:
- EP-A- 0 629 786
- GB-A- 2 185 081
- US-A- 2 596 952
- US-A- 3 437 004
- US-A- 4 500 238

## Beschreibung

Die Erfindung betrifft einen Metalldübel zur Verankerung in dünnen Wandplatten aus Gipskarton, Preßspan oder dergleichen Baumaterial gemäß dem Oberbegriff des Anspruchs 1, welcher von dem aus der US - A - 3 437 004 bekannten Stand der Technik ausgeht.

Bei diesem Dübel sind in die zum Eindrehen der Schraube ausgebildeten Haltestege Gewinderillen eingeformt, welche für Schrauben mit metrischem Gewinde vorgesehen sind. Diese Gewinderillen sind offenbar im Zuge der Biegearbeitsgänge spanlos in die Haltestege eingeprägt, da das spanabhebende Einschneiden von Gewindegängen aus Kostengründen ausscheidet. Demzufolge ist der Eingriff des Schraubengewindes in die abwechselnd nur halbseitig angebotenen Gewinderillen begrenzt und die Kraftübertragung auf den entsprechenden Schaftabschnitt mäßig, so daß die Gefahr besteht, daß die Schraube im Gewinde "durchrutscht".

Auch fehlt dem Dübelschaft im Anlieferungszustand die zum Einschlagen des Dübels erforderliche Biegesteifigkeit. Zum Einschlagen des Dübels ist es daher erforderlich, die Schraube vorher bis in das geschlitzte Ende des Dübelschaftes soweit einzudrehen, daß das Schraubengewinde den Schlitz voll ausfüllt und die Spitze am unteren Ende vorsteht. Erst dann kann der Dübelschaft durch Hammerschläge auf den Schraubenkopf in die Wandplatte eingetrieben werden. Sobald die am oberen Schaftende quer abstehenden Anschlaglappen auf der Wandplatte aufliegen, wird die Schraube wieder herausgedreht und kann nun erst durch Einführen in das Durchgangsloch der zu befestigenden Halteplatte und durch erneutes Eindrehen in die Gewinderillen der Haltestege seinem eigentlichen Bestimmungszweck zugeführt werden. Das zusätzliche Aus- und Einschrauben ist aber mit einem enormen Zeitverlust verbunden.

Aus **EP 0 629 786 A1** ist weiterhin ein Metalldübel bekannt, bei welchem zwei spreizbare Schaftteile an ihren Spitzen über einen abreißbaren dünnen Steg einstückig miteinander verbunden und aufeinandergeklappt sind. Die halbrund geformten Haltestege zum Eindrehen der Schraube befinden sich hierbei im Kopfbereich des Schaftes. Beim Eindrehen der Schraube in die Gewindestege schiebt sich die Schraubenspitze zwischen die beiden Schaftteile und spreizt sie derart auseinander, daß diese an der Rückseite der Wandplatte Halt finden.

Dieser Metalldübel läßt sich zwar leicht in die Gipskartonplatten einschlagen und bietet auch eine enorme Haltekraft. Er hat jedoch den Nachteil, daß zur Herstellung des Schaftes durch die zwei aufeinandergeklappten Schafthälften die doppelte Dübellänge an Blechmaterial verbraucht wird.

Aufgabe der Erfindung ist es, den eingangs erwähnten Metalldübel so zu gestalten, daß die Schrauben in den Haltestegen einen sicheren Halt finden und der Dübelschaft ohne Zuhilfenahme der Schraube bereits in seinem Anlieferungszustand in die Wandplatte eintreibbar ist. Diese Aufgabe wird im wesentlichen durch die in Anspruch 1 angegebene Erfindung gelöst.

Bei Verwendung von entsprechend gehärtetem Federstahl oder auch rostfreiem Stahl läßt sich der erfindungsgemäß geformte Dübel ohne weiteres in die besagten Wandplatten eintreiben. Durch Eindrehen der Schraube in die Haltestege an der Dübelspitze wird diese von hinten an die Platte herangezogen. Dabei knicken die äußeren Stege des mittleren Abschnitts nach der einen Seite und die beiden inneren Stege nach der anderen Seite weg und stützen sich an der Plattenrückseite mit der jeweils halben Länge der Biegestege ab.

In den Unteransprüchen sind weitere zur Ausgestaltung der Erfindung förderliche Merkmale angegeben. So wird durch die Ausbildung des Dübelschaftes nach **Anspruch 2** erreicht, daß bei den inneren und äußeren Biegestegen beim Anziehen der Schraube die gleiche Knickwirkung erreicht wird. Die Verbindung der inneren Biegestege durch halbrund geformte Querstege nach **Anspruch 3** bewirkt eine Verstärkung der Biegestege zwischen den Knicklinien und sorgt dafür, daß der Dübel beim Eintreiben in die Wandplatte seine Form behält. Durch das Abknicken der achsparallelen Schaftkanten nach **Anspruch 4** wird der Biegequerschnitt des Schaftes zusätzlich verstärkt, so daß der Metalldübel ohne Schraube als Versteifungshilfe wie beim Stand der Technik problemlos mit dem Hammer in die Trägerplatte eingetrieben werden kann.

In der Zeichnung ist ein Ausführungsbeispiel der Erfindung dargestellt, welches nachfolgend beschrieben wird. Es zeigt
- Fig. 1: einen erfindungsgemäßen Metalldübel in Vorderansicht,
- Fig. 2: den Metalldübel im Längsschnitt nach Linie II-II in Fig. 1,
- Fig. 3: den Metalldübel in Draufsicht,
- Fig. 4: einen Querschnitt durch den Schaft nach Linie IV - IV in Fig. 1,
- Fig. 5: eine zur Herstellung des Dübels verwendete Platine nach dem Ausstanzen des Schaft-Rohlings und
- Fig. 6: den Metalldübel im Einbauzustand, und zwar links vor und rechts nach dem Eindrehen der Schraube.

Der in den Figuren dargestellte Metalldübel dient zur Verankerung in dünnen Wandplatten aus Gipskarton, Preßspan oder dgl. Baumaterial. Sein Schaft **1** ist, wie aus **Fig. 5** ersichtlich, einlagig aus einer Blechplatine herausgestanzt und geformt und besteht aus drei Abschnitten. Der erste Abschnitt **4** besitzt an seinem Einführungsende zwei Spitzen **3** und ist mit mehreren aus dem mittleren Streifen herausgestanzten halbrunden Haltestegen **2** versehen, welche abwechselnd nach beiden Seiten herausgeformt sind und in Breite und Steigung der Gewindeform der einzudrehenden Schraube **13** derart angepaßt sind, daß die Haltestege **2** in deren Gewinderillen **19** eingreifen.

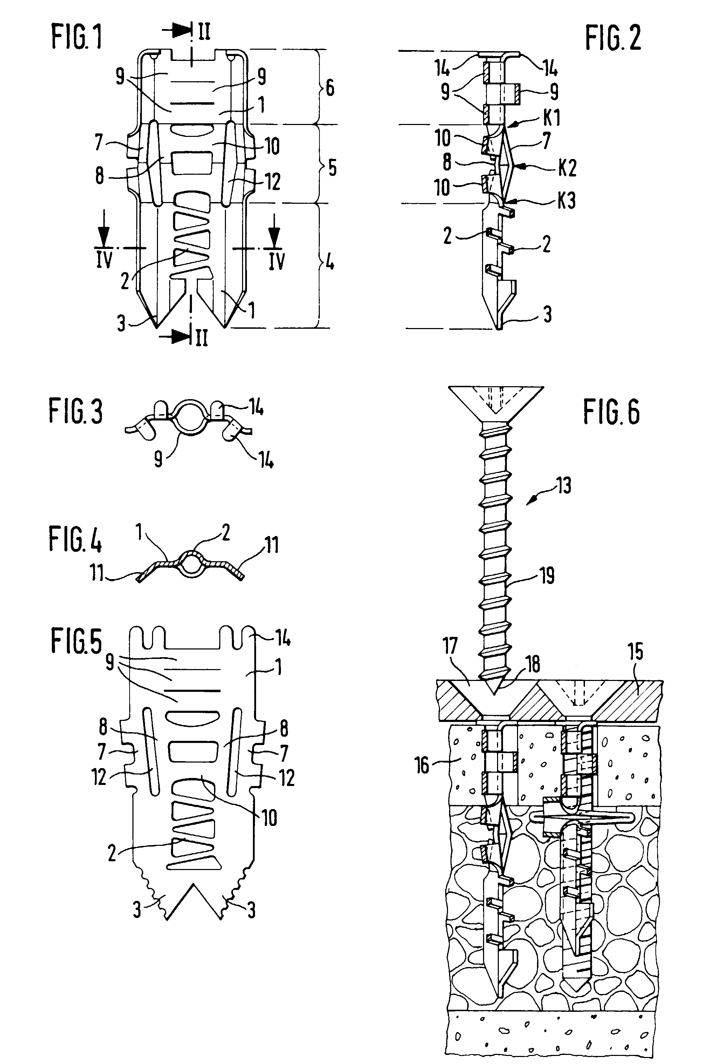

Der mittlere Abschnit **5** dient der eigentlichen Verankerung und ist durch zwei, achsparallel verlaufende äußere Biegestege **7** und zwei innere Biegestege **8** gebildet, die von den beiden äußeren Biegestegen **7** durch Schlitze **12** voneinander getrennt sind. Die beiden äußeren Stege **7** sind an den Knicklinien **K1**, **K2** und **K3** aus der Schaftebene leicht nach einer Seite weggeknickt, während die beiden inneren Stege **8** an den auf gleicher Höhe liegenden Knicklinien nach der entgegengesetzten Seite weggeknickt sind und, wie aus **Fig. 2** ersichtlich, mit den äußeren Stegen **7** im Querschnitt einen schmalen Rhombus bilden. Die inneren Biegestege **8** sind untereinander durch zwei Querstege **10** verbunden, welche auf der zum Ausknicken vorgesehenen Seite den zum Einführen der Schraube **13** benötigten Freiraum halbrund überspannen.

Der dritte, kopfseitige Abschnitt 6 ist mit abwechselnd nach beiden Seiten aus der Schaftebene herausgeformten halbrunden Führungsschalen **9** zum Einführen der Schraube **13** versehen und besitzt an seinem Kopfende nach beiden Seiten querabstehende Lappen **14** zur Auflage auf die Wandplatte **15** beim Einschlagen des Dübels. Weiterhin ist der Biegequerschnitt des Schaftes **1** im einführseitigen Abschnitt **4** beiderseits der Halterstege **2** durch achsparallel weggeknickte Kanten **11** verstärkt.

Die Funktionsweise des Metalldübels ist in **Fig. 6** anschaulich dargestellt. Um einen flachen Gegenstand wie eine Platte **15** auf der Wandplatte **16** zu befestigen, wird der Metalldübel über die Lappen **14** mit einem Hammer in die Wandplatte **16** eingetrieben, bis die Lappen **14** auf der Plattenoberfläche aufliegen. Sodann wird die Schraube **13** durch das Loch **17** in der Platte **15** und die Führungsschalen **9** des kopfseitigen Abschnitts **6** eingeführt, bis die Schraubenspitze **18** den Schraubbereich des unteren Schaftabschnitts **4** erreicht hat und die Haltestege **2** in die Gewinderillen **19** eingreifen.

Beim weiteren Eindrehen der Schraube **13** wird der untere Schaftabschnitt **4** nach oben, d.h. in Richtung des kopfseitigen Abschnitts **6** gezogen, wobei die Biegestege **7** und **8** an den dafür vorgesehenen Knicklinien **K1**, **K2** und **K3** in entgegengesetzter Richtung abknicken und sich an der Unterseite der Wandplatte **15** mit der halben Breite der Biegestege **7** und **8** abstützen.

Falls die Schraube **13** später einmal gelöst werden muß, bleibt der Metalldübel in seiner Verankerungslage zurück und kann jederzeit wieder zum Eindrehen der Schraube **13** verwendet werden.

## Patentansprüche

1. Metalldübel mit einer einzudrehenden Schraube zur Verankerung in dünnen Wandplatten aus Gipskarton, Preßspan oder dgl. Baumaterial, wobei der Dübelschaft ( 1 ) aus einer Blechplatine herausgearbeitet und aus drei Abschnitten gebildet ist, wovon der erste, an der Einführungsseite liegende Abschnitt ( 4 ) mit aus dem Schaft ( 1) herausgestanzten, abwechselnd nach beiden Seiten halbrund geformten Haltestegen ( 2 ) versehen ist, welche zum Eindrehen einer Schraube ( 13 ) ausgebildet sind, der zweite, in der Mitte liegende Abschnitt ( 5 ) achsparallel verlaufende äußere und innere Biegestege ( 7 u. 8 ) aufweist, welche durch Schlitze ( 12) voneinander getrennt und in entgegengesetzter Richtung wegknickbar ausgebildet sind, und welche an den zum Abknicken vorgesehenen Linien K1, K2 und K3 in entgegengesetzter Richung leicht vorgeknickt sind, und der dritte, am Kopfende befindliche Abschnitt ( 6 ) mit abwechselnd nach beiden Seiten halbrund geformten Führungsschalen ( 9 ) zum Einführen der Schraube ( 13) versehen ist,
**dadurch gekennzeichnet,** daß zum Eindrehen einer Schraube die Haltestege ( 2 ) in Breite und Steigung der Gewindeform der Schraube ( 13 ) derart angepaßt sind, daß diese Haltestege ( 2 ) in deren Gewinderillen ( 19) eingreifen.

2. Metalldübel nach Anspruch 1, dadurch gekennzeichnet, daß im mittleren Abschnitt ( 5 ) zwei innere Biegestege ( 8 ) vorgesehen sind, deren Biegequerschnitte etwa denjenigen der beiden äußeren Biegestege ( 7 ) entsprechen.

3. Metalldübel nach Anspruch 2, dadurch gekennzeichnet, daß die beiden inneren Stege ( 8 ) zwischen den Knicklinien K1, K2 und K3 durch zwei Querstege ( 10) untereinander verbunden sind, welche - wie die Führungsschalen ( 9 ) - zum Durchführen der Schraube ( 13 ) halbrund geformt sind.

4. Metalldübel nach einem der Ansprüche 1 bis 3, dadurch gekennzeichnet, daß der Schaft ( 1 ) im ersten Abschnitt ( 4 ) beiderseits der Haltestege ( 2 ) durch achsparallel abgeknickte Kanten ( 11 ) im Biegequerschnitt verstärkt ist.

## Claims

1. A metal dowel with a screw to be screwed in, for anchoring in thin wall panels of plasterboard, chipboard or the like building material, wherein the dowel shank (1) is produced from a sheet metal plate and is formed from three portions of which the first portion (4) which is at the insertion end is provided with holding limbs (2) which are stamped out of the shank (1) and which are shaped in a semi-round configuration alternately towards both sides and which are adapted for screwing in a screw (13), the second, centrally disposed portion (5) has outer and inner bending limbs (7 and 8) which extend in parallel relationship to the axis and which are separated from each other by slots (12) and which are adapted to be bendable away in opposite directions and which are slightly pre-bent in opposite directions at the lines K1, K2 and K3 provided for bending thereof, and the third portion (6) which is at the head end is provided with guide shell portions (9) which are shaped in a semi-round configuration alternately towards both sides, for the introduction of the screw (13), characterised in that, for screwing in a screw, the holding limbs (2) are adapted in width and pitch to the screwthread shape of the screw (13) in such a way that said holding limbs (2) engage into the screwthread channels (19) thereof.

2. A metal dowel according to claim 1 characterised in that provided in the central portion (5) are two inner bending limbs (8) whose bending cross-sections approximately correspond to those of the two outer bending limbs (7).

3. A metal dowel according to claim 2 characterised in that the two inner limbs (8) are connected together between the bend lines K1, K2 and K3 by two transverse limbs (10) which - like the guide shell portions (9) - are shaped in a semi-round configuration for the screw (13) to pass therethrough.

4. A metal dowel according to one of claims 1 to 3 characterised in that the shank (1) is reinforced in its bending cross-section in the first portion (4) on both sides of the holding limbs (2) by edges (11) which are bent away in parallel relationship to the axis.

## Revendications

1. Cheville métallique d'ancrage dans des panneaux muraux minces faits de placoplâtre, de carton comprimé lustré ou d'un matériau de construction analogue, la tige formant cheville (1) étant en l'occurrence réalisée à partir d'un flan en tôle et se composant de trois sections, la première section (4) correspondant au côté introduction étant munie de nervures de retenue de forme hémisphérique (2), réalisées, alternativement orientées d'un côté et de l'autre, par découpage à la presse dans la tige (1), dont la configuration est étudiée pour permettre le vissage d'une vis (13), la deuxième section (5) se trouvant dans la partie centrale, comportant des barrettes entretoises cintrées extérieure et intérieure (7 et 8) disposées parallèlement à l'axe, qui sont respectivement séparées l'une de l'autre par des fentes (12) et qui sont conçues pour pouvoir s'écarter l'une de l'autre, dans une direction respectivement opposée, par effet de pliage et qui comportent une amorce de pliage préalable, de sens respectivement opposé, au niveau des lignes K1, K2 et K3 correspondant aux endroits des pliures et la troisième section formant la partie de tête (6) munie de coquilles de guidage d'introduction de forme semi-circulaire (9), alternativement orientées vers les deux côtés, pour l'introduction de la vis (9), caractérisée en ce que, pour permettre le vissage d'une vis, la largeur et le pas des nervures de retenue (2) sont adaptés à la géométrie du filetage de la vis (13) de telle manière que ces nervures de retenue (2) viennent s'encastrer dans les fonds de ses filets.

2. Cheville métallique selon la revendication 1, caractérisée en ce qu'il est prévu, dans la section médiane (5), deux barrettes entretoises cintrées intérieures (8), dont les sections transversales de pliage correspondent sensiblement à celles des deux barrettes entretoises cintrées extérieures (7).

3. Cheville métallique selon la revendication 2, caractérisée en ce que les deux nervures intérieures (8) sont reliées entre elles, entre les lignes de pliage K1, K2 et K3, par des barrettes entretoises transversales (10) qui présentent, tout comme les coquilles de guidage d'introduction (9), une forme semi-circulaire pour permettre le passage de la vis (13).

4. Cheville métallique selon l'une des revendications 1 à 3, caractérisée en ce que la tige (1), dans sa première section (4), est renforcée de part et d'autre des nervures de retenue (2), dans la section transversale de pliage, par des arêtes (11) coudées parallèlement à l'axe.
